# EUROPÄISCHE PATENTSCHRIFT

(11) **EP 1 763 405 B1**
(45) Veröffentlichungstag und Bekanntmachung des Hinweises auf die Patenterteilung: **19.10.2011**
(21) Anmeldenummer: 05754063.5
(22) Anmeldetag: 01.07.2005
(51) Int. Cl.: B05C 17/005, B65D 81/32, A61M 5/34

(54) **AUSTRAGANORDNUNG, MIT EINER SPRITZE ODER KARTUSCHE, EINER VERSCHLUSSKAPPE UND EINEM MISCHER**
DISPENSING SYSTEM COMPRISING A SYRINGE OR CARTRIDGE, A CLOSING CAP AND A MIXER
DISPOSITIF DE DEVERSEMENT COMPRENANT UNE SERINGUE OU UNE CARTOUCHE, UN CAPUCHON DE FERMETURE ET UN MELANGEUR

(30) Priorität: 08.07.2004 CH 116904
(43) Veröffentlichungstag der Anmeldung: 21.03.2007
(73) Patentinhaber: Sulzer Mixpac AG, 9469 Haag (Rheintal) (CH)
(72) Erfinder: KELLER, Wilhelm, A., CH-6402 Merlischachen (CH)
(74) Vertreter: Sulzer Management AG
(86) Internationale Anmeldenummer: PCT/CH2005/000370
(87) Internationale Veröffentlichungsnummer: WO 2006/005206

(56) Entgegenhaltungen:
- EP-A- 0 747 114
- EP-A- 1 125 641
- EP-A- 1 172 154
- DE-A1- 10 233 051
- US-A- 4 538 920
- US-A- 4 981 241
- US-A- 4 989 758

## Beschreibung

Die vorliegende Erfindung bezieht sich auf eine Anordnung zum Austragen von zwei Komponenten mit einer Doppelspritze oder Doppelkartusche, einer Verschlusskappe und einem Mischer, wobei diese Teile mit Mitteln zur Befestigung der Verschlusskappe oder des Mischers an die Doppelspritze oder Doppelkartusche versehen sind.

Eine solche Anordnung ist insbesondere für die Einmalanwendung in der Dental- und Medizintechnik gedacht und dazu vorgesehen, nach dem Gebrauch entsorgt zu werden. Für die Verwendung wird die Verschlusskappe entfernt und der Mischer aufgesetzt und befestigt. An solche Anordnungen, die nach einmaligem Gebrauch entsorgt werden, sind bezüglich Kosten relativ hohe Anforderungen gestellt.

Aus der US-A-5 584 817 ist eine Spritzenanordnung bekannt, die Mittel aufweist, um die Nadel nach dem Gebrauch am Gerät zu halten, um sie dadurch besser entsorgen zu können. Der Halter sowie die Massnahmen sind dabei relativ aufwendig.

Die US-A-5 722 829 offenbart eine Austragvorrichtung mit einer Verbindung zwischen Auftraggerät und Mischer mit einer Drehplatte, um den Mischer abnehmbar oder nicht abnehmbar zu befestigen.

In diesem bekannten Stand der Technik wird die Entsorgung von Einmalspritzen nicht angetönt und es ist daher davon ausgehend Aufgabe der vorliegenden Erfindung, eine Anordnung anzubieten, die zwecks Kosteneinsparung so vereinfacht ist, dass eine rationelle und kostengünstige Herstellung möglich ist. Diese Aufgabe wird mit einer Anordnung nach Anspruch 1 gelöst.

Die Erfindung wird im Folgenden an Hand von Zeichnungen von Ausführungsbeispielen näher erläutert werden:
- Figur 1: zeigt in perspektivischer Sicht und schematisch eine erste Anordnung,
- Figur 2: zeigt eine Doppelkartusche oder Doppelspritze im Längsschnitt und im Grundriss,
- Figur 3: zeigt einen aufgesetzten Verschlusskappe im Längsschnitt,
- Figur 4: zeigt einen Längsschnitt durch einen aufgesetzten Mischer,
- Figur 5: zeigt eine Ausführungsvariante zu Figur 1,
- Figur 6: zeigt im Schnitt die Doppelkartusche gemäss Figur 5,
- Figur 7: zeigt im Schnitt die aufgesetzte Verschlusskappe gemäss Figur 5,
- Figur 8: zeigt im Schnitt den aufgesetzten Mischer gemäss Figur 5.
- Figur 9: zeigt im Schnitt einen aufgesetzten Adapter und einen Mischer, und
- Figur 9A: zeigt einen Schnitt gemäss Linie IXA - IXA in Figur 9.

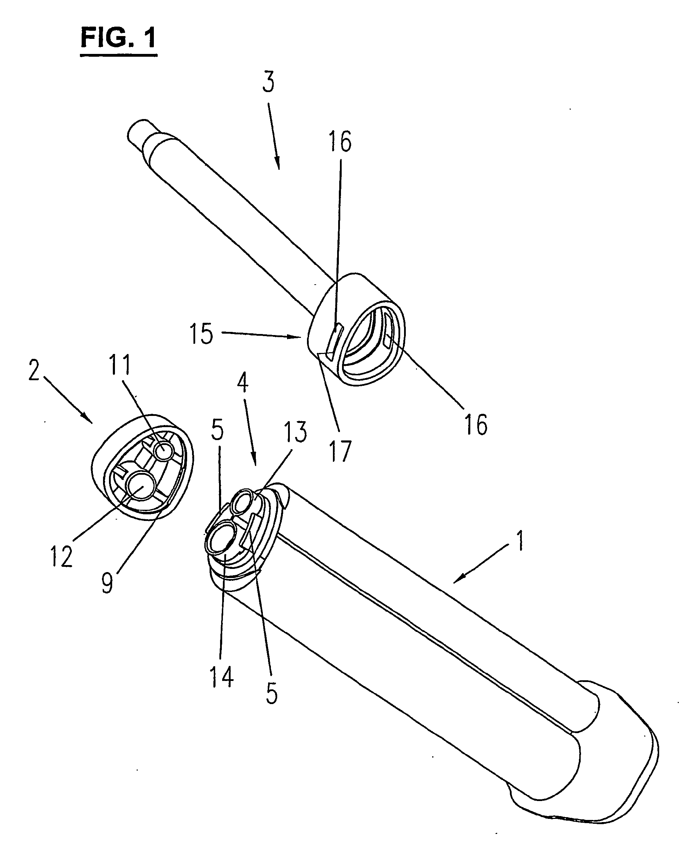

Die Anordnung gemäss Figur 1 besteht aus einer Doppelkartusche oder Doppelspritze 1, einer Verschlusskappe 2 und einem Mischer 3. Erfindungswesentlich ist, dass die Verschlusskappe von der Doppelkartusche abnehmbar ist, während der Mischer derart aufgesetzt werden soll, dass er nicht mehr abnehmbar ist und der Beanspruchung beim Austragen widersteht.

Der Auslassflansch 4 von Doppelkartusche 1 weist zwei Haltenocken 5 auf, die sich beidseitig der Auslässe 13 und 14 befinden. Diese Haltenocken 5 sind federnd ausgebildet und weisen einen Absatz 6 sowie vorne, auslassseitig, eine abgeschrägte Fläche 7 auf, die ein Einführen des Mischers oder der Verschlusskappe erleichtern.

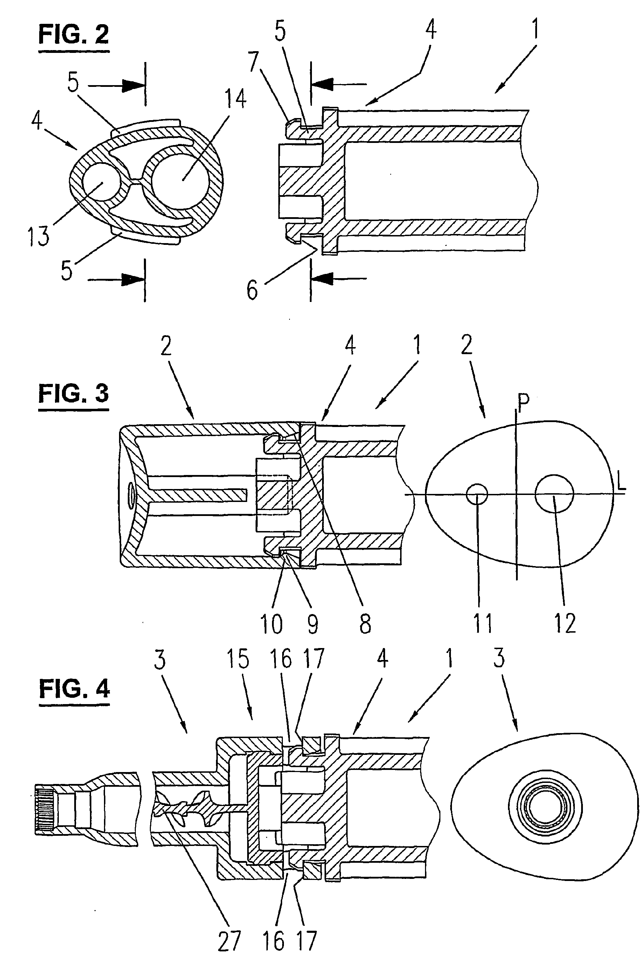

Aus den Figuren 1 und 3 ist ferner ersichtlich, dass die Verschlusskappe 2 bei ihrem offenen Ende 8 einen umlaufenden Innenwulst 9 aufweist, der an seinem Übergang in das Kappeninnere eine Anschrägung 10 aufweist, um das Abziehen der Verschlusskappe von den Nocken zu erleichtern. Die Verschlusskappe weist ferner zwei Stopfen 11 und 12 auf, die dichtend in die entsprechenden Auslässe 13 und 14 der Doppelkartusche greifen.

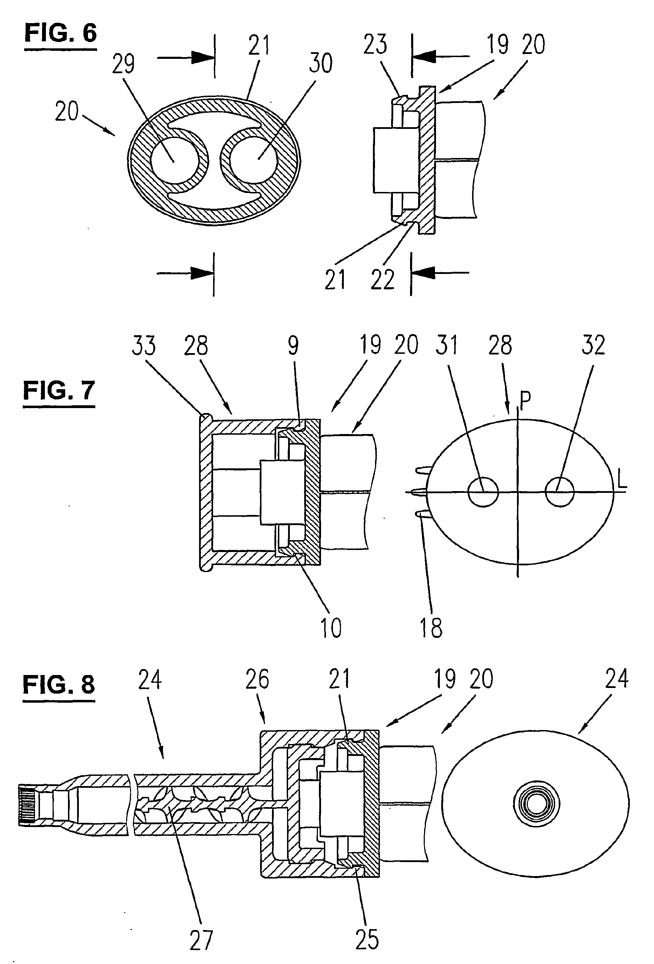

Aus den Figuren 1, 2 und 3 geht ferner hervor, dass die Doppelkartusche zwei Behälter aufweist, deren Querschnittsflächen und damit Volumen von 1:1 verschieden sind. Bei diesem Ausführungsbeispiel ist die Grundfläche des Kartuschen-Auslassflansches 4, der Verschlusskappe und des Mischereinlassteils 15 bezüglich einer der Achsen L und P, hier Querachse P, nicht symmetrisch, d.h. eiförmig ausgebildet. Diese eiförmige Form wirkt als Kodierung, um die Verschlusskappe und den Mischer gerichtet und in eindeutiger Stellung auf die Doppelkartusche aufsetzen zu können. Bei einer 1:1-Ausführung der Behälter weisen die entsprechenden Teile eine bezüglich beider Achsen L und P symmetrische, hier ovale Grundfläche auf, wie sie in den Figuren 6 bis 8 dargestellt ist.

In Figur 1 und im Schnitt der Figur 4 ist ersichtlich, dass der Einlassteil 15 von Mischer 3 an der Seite, d.h. an der Stelle der Haltenocken 5 der Doppelkartusche, mit je einem Schlitz 16 versehen ist, in die die Haltenocken 5 derart eingreifen, dass die Absätze 6 der Haltenocken die kartuschenseitige Kante 17 der Schlitze 16 hintergreifen. Einmal eingeschnappt, ist ein Abnehmen des Mischers ohne Zerstörung nicht mehr möglich.

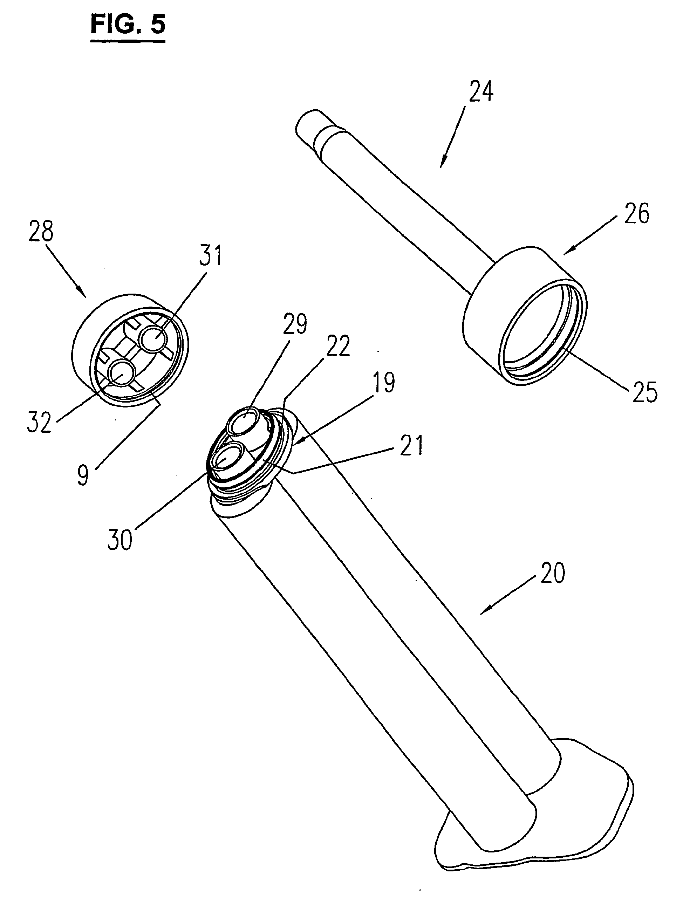

In der Ausführungsvariante gemäss den Figuren 5 bis 8 weist der Flansch 19 von Doppelkartusche 20 einen umlaufenden Haltewulst 21 auf, dem sich eine umlaufende Nut 22 anschliesst und der in Auslassrichtung eine Anschrägung 23 aufweist.

Der umlaufende Innenwulst 9 von Verschlusskappe 28 ist derselbe wie derjenige von Verschlusskappe 2 gemäss Figur 3 und weist dieselbe Anschrägung 10 auf, die im verschlossenen Zustand an der Nutoberkante der Doppelkartusche anliegt und ein Abnehmen der Verschlusskappe ermöglicht. Diese Verschlusskappe weist hier zwei gleiche Stopfen 31 und 32 auf.

Der Mischer 24 von Figur 8 weist an seinem Einlassteil 26 einen zur Nut 22 am Haltewulst der Doppelkartusche komplementären Innenwulst 25 auf, der in der Nut 22 einrastet und somit eine nicht lösbare Verbindung zwischen Doppelkartusche und Mischer herstellt. Die übrigen Elemente des Mischers, wie Mischelement 27, sind dieselben wie diejenigen gemäss Figur 4.

Ein Vergleich der beiden Verschlusskappen 2 und 28 gemäss den Figuren 3 und 7 zeigt, dass bei einem Behälter-Querschnittsverhältnis von 1:1 die ovale Form gemäss Figur 7 zweckmässig ist, wobei es nicht wesentlich ist, in welcher um 180° verdrehten Stellung die Verschlusskappe oder der Mischer auf die Doppelkartusche aufgesetzt wird, während es bei einem von 1:1 verschiedenen Querschnittsverhältnis der Behälter zwecks besserer Handhabung zweckmässig ist, eine Kodierung durch die Form bereitzustellen, wobei z.B. die Eiform gemäss Figur 3 gewählt werden kann, so dass ein Aufsetzen der Verschlusskappe oder des Mischers in der richtigen Orientierung erleichtert wird.

Zusätzlich zur Formgebung können Kodierungsrippen 18 sowohl an der Verschlusskappe als auch am Mischer einerseits als auch an der Doppelkartusche andererseits angebracht werden, wodurch das gerichtete, richtige Aufsetzen, insbesondere des Mischers, noch mehr erleichtert wird. Darüberhinaus wird die Handhabung der Verschlusskappe, insbesondere ihr Abziehen, durch eine Handhabe 33 an ihrem geschlossenen Ende noch weiter erleichtert.

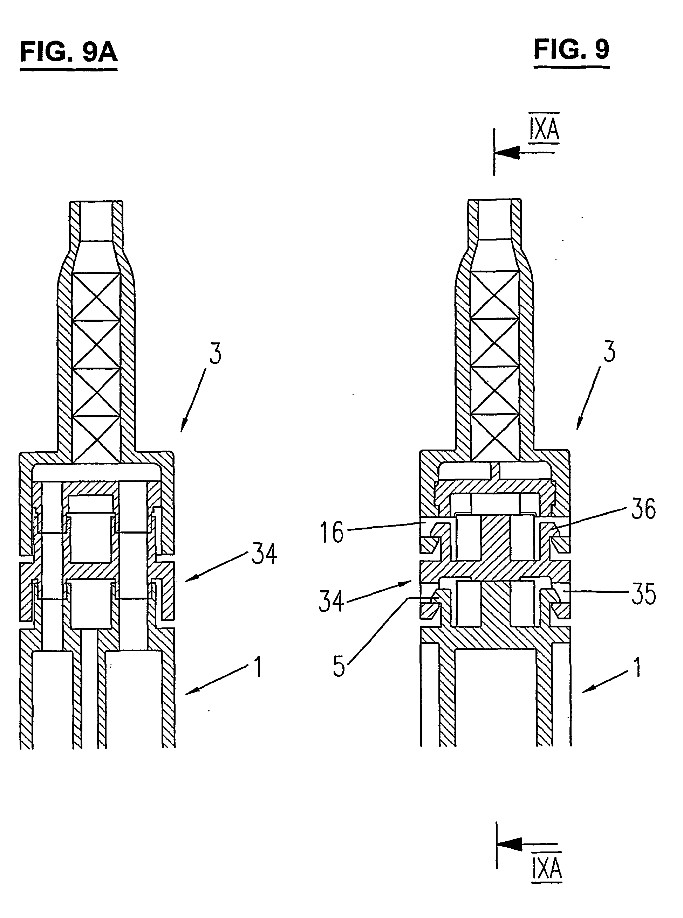

Im Ausführungsbeispiel gemäss den Figuren 9 und 9A ist zwischen der Doppelkartusche 1 und dem Mischer 3 ein Adapter 34 angeordnet. Kartuschenseitig weist der Adapter 34 in dieser Ausführungsform zwei Schlitze 35 auf, in die die Haltenocken 5 an der Doppelkartusche eingreifen, um die Schlitze 35 des Adapters zu hintergreifen und diesen an der Doppelkartusche zu befestigen. Am anderen Ende weist der Adapter ähnliche Haltenocken 36 wie die Haltenocken 5 der Doppelkartusche auf, die die Schlitze 16 am Mischer 3 hintergreifen.

Von diesem Ausführungsbeispiel ausgehend, sind viele Variationen möglich. So kann der Adapter eine beliebige Länge aufweisen, flexibel ausgebildet sein oder aus einem flexiblen Material bestehen, oder abgewinkelt sein. Der auslassseitige Anschluss des Adapters ist als Mischeranschluss ausgebildet.

Es ist selbstredend, dass der Adapter auch für das Ausführungsbeispiel gemäss den Figuren 5-8 ausgebildet sein kann, wobei der Adapter kartuschenseitig einen Innenwulst wie der Innenwulst 25 an Mischer 24 und auslassseitig entweder die Haltenocken 36 oder einen umlaufenden Haltewulst mit anschliessender umlaufender Nut, oder andere Anschlussmittel aufweisen kann. Die Grundfläche des Adapters ist grundsätzlich dieselbe wie diejenige der jeweiligen Doppelkartusche oder Doppelspritze und des Mischers.

Für das leichte Abnehmen der Verschlusskappe und das Nichtabnehmen des Mischers ist jedoch die äussere Form der Doppelkartusche oder des Mischers oder der Verschlusskappe nicht massgebend sondern höchstens eine Erleichterung. Massgebend dafür ist das Zusammenspiel der Haltenocken oder des umlaufenden Haltewulstes an der Doppelkartusche und die Ausgestaltung der Schlitze bzw. des umlaufenden Innenwulstes am Mischer oder Adapter und an der Verschlusskappe.

## Patentansprüche

1. Anordnung zum Austragen von zwei Komponenten, mit einer Doppelspritze oder Doppelkartusche (1, 20), einer Verschlusskappe (2, 28) und einem Mischer (3, 24), wobei diese Teile mit Mitteln zur Befestigung (5, 21; 6, 9, 25) der Verschlusskappe oder des Mischers an der Doppelspritze oder Doppelkartusche versehen sind, **dadurch gekennzeichnet, dass** die Mittel zur Befestigung (5, 21; 6, 9, 25) ausgebildet sind, die Verschlusskappe (2, 28) abnehmbar und den Mischer (3, 24) allein abnehmbar nach Zerstörung an die Doppelspritze oder Doppelkartusche (1, 20) zu befestigen.

2. Anordnung nach Anspruch 1, **dadurch gekennzeichnet, dass** die Befestigungsmittel Haltenocken (5) an der Doppelspritze oder Doppelkartusche und einen Innenwulst (9) an der Verschlusskappe (2, 28) und den Haltenocken entsprechende Schlitze (16) am Mischer (3) enthalten.

3. Anordnung nach Anspruch 1, **dadurch gekennzeichnet, dass** die Befestigungsmittel einen Haltewulst (21) an der Doppelspritze oder Doppelkartusche und einen Innenwulst (9) an der Verschlusskappe (2, 28) und einen umlaufenden Innenwulst (25) am Mischer (24) enthalten.

4. Anordnung nach Anspruch 2 oder 3, **dadurch gekennzeichnet, dass** der Innenwulst (9) an der Verschlusskappe (2, 28) bei seinem Übergang in das Kappeninnere eine Anschrägung (10) aufweist, die an den Haltenocken (5) oder dem Haltewulst (21) an der Doppelspritze oder Doppelkartusche anliegt, während die Schlitze (16) oder der Innenwulst (25) am Mischer ausgebildet sind, die Haltenocken (5) oder den Haltewulst (21) an der Doppelspritze oder Doppelkartusche zu hintergreifen.

5. Anordnung nach einem der Ansprüche 1 bis 4, **dadurch gekennzeichnet, dass** die Grundfläche des Auslassflansches (19) der Doppelspritze oder Doppelkartusche (20), der Verschlusskappe (28) und des Einlassteils (26) des Mischers (24) für ein Behälter-Querschnittsverhältnis von 1:1 eine bezüglich der beiden Achsen (L, P) symmetrische, insbesondere ovale Form aufweist.

6. Anordnung nach einem der Ansprüche 1 bis 4, **dadurch gekennzeichnet, dass** die Grundfläche des Auslassflansches (4) der Doppelspritze oder Doppelkartusche (1), der Verschlusskappe (2) und des Einlassteils (15) des Mischers (3) für ein Behälter-Querschnittsverhältnis, das von 1:1 verschieden ist, eine bezüglich einer (P) der beiden Achsen (L, P) nicht symmetrische, insbesondere eiförmige Form aufweist.

7. Anordnung nach einem der Ansprüche 1 bis 6, **dadurch gekennzeichnet, dass** zwischen der Doppelspritze oder Doppelkartusche und dem Mischer ein Adapter (34) angeordnet ist.

8. Anordnung nach Anspruch 7, **dadurch gekennzeichnet, dass** der Adapter (34) kartuschenseitig dieselben Anschlussmittel (35, 25) wie der Mischer und auslassseitig dieselben Anschlussmittel (5, 36) wie die Doppelspritze oder Doppelkartusche aufweist.

9. Anordnung nach Anspruch 7 oder 8, **dadurch gekennzeichnet, dass** die Grundfläche des Adapters (34) bezüglich der beiden Achsen (L, P) eine symmetrische, insbesondere ovale Form, oder bezüglich einer (P) der beiden Achsen (L, P) eine nicht symmetrische, insbesondere eiförmige Form aufweist.

## Claims

1. An assembly for dispensing two components, including a double syringe or double cartridge (1, 20), a closing cap (2, 28), and a mixer (3, 24), the latter parts being provided with means (5, 21, 6, 9, 25) for connecting the closing cap (2, 28) or the mixer (3, 24) to the double syringe or double cartridge (1, 20), **characterized in that** the connecting means (5, 21, 6, 9, 25) are arranged to connect the closing cap (2, 28) detachable and the mixer (3, 24) only detachable after destruction to the double syringe or double cartridge (1, 20).

2. An assembly according to claim 1, **characterized in that** the connecting means include retaining cams (5) on the double syringe or double cartridge and an inner bead (9) on the closing cap (2, 28) and slots (16) on the mixer (3) that correspond to the retaining cams.

3. An assembly according to claim 1, **characterized in that** the connecting means include a retaining bead (21) on the double syringe or double cartridge and an inner bead (9) on the closing cap (2, 28) and a circumferential inner bead (25) on the mixer (24).

4. An assembly according to claim 2 or 3, **characterized in that** the inner bead (9) on the closing cap (2, 28) has a bevel (10) at its junction with the cap interior that rests on the retaining cams (5) or the retaining bead (21) on the double syringe or double cartridge while the slots (16) or the inner bead (25) on the mixer are arranged to engage behind the retaining cams (5) or the retaining bead (21) on the double syringe or double cartridge.

5. An assembly according to any one of claims 1 to 4, **characterized in that** for a cross-sectional ratio of the containers of 1:1, the horizontal projection of the outlet flange (19) of the double syringe or double cartridge (20), of the closing cap (28), and of the inlet portion (26) of the mixer (24) has a shape that is symmetrical with respect to both axes (L, P), more particularly elliptical.

6. An assembly according to any one of claims 1 to 4, **characterized in that** for a cross-sectional ratio of the containers that is different from 1:1, the horizontal projection of the outlet flange (4) of the double syringe or double cartridge, of the closing cap (2), and of the inlet portion (15) of the mixer (3) has a shape that is asymmetrical with respect to one (P) of the two axes (L, P), more particularly oval.

7. An assembly according to any one of claims 1 to 6, **characterized in that** an adapter (34) is arranged between the double cartridge or double syringe and the mixer.

8. An assembly according to claim 7, **characterized in that** the adapter (34) has the same coupling means (35, 25) as the mixer on its cartridge side and the same coupling means (5, 36) as the double cartridge or double syringe on its outlet side.

9. An assembly according to claim 7 or 8, **characterized in that** the horizontal projection of the adapter (34) has a shape that is symmetrical with respect to both axes (L, P), more particularly an elliptical one, or a shape that is asymmetrical with respect to one (P) of the two axes, more particularly an oval one.

## Revendications

1. Dispositif de distribution de deux composants, avec une seringue double ou une cartouche double (1, 20), un capuchon de fermeture (2, 28) et un mélangeur (3, 24), où ces parties sont pourvues de moyens pour la fixation (5, 21; 6, 9, 25) du capuchon de fermeture ou du mélangeur à la seringue double ou la cartouche double, **caractérisé en ce que** les moyens de fixation (5, 21; 6, 9, 25) sont réalisés pour fixer le capuchon de fermeture (2, 28) amoviblement et le mélangeur (3, 24) seulement après la destruction amoviblement à la seringue double ou cartouche double (1, 20).

2. Agencement selon la revendication 1, **caractérisé en ce que** les moyens de fixation contiennent des cames de retenue (5) à la seringue double ou cartouche double et un bourrelet intérieur (9) au capuchon de fermeture (2, 28) et des fentes (16) correspondant aux cames de retenue au mélangeur (3).

3. Agencement selon la revendication 1, **caractérisé en ce que** les moyens de fixation comprennent un bourrelet de retenue (21) à la seringue double ou cartouche double et un bourrelet intérieur (9) au capuchon de fermeture (2, 28) et un bourrelet intérieur (25) s'étendant tout autour au mélangeur (24).

4. Agencement selon la revendication 2 ou 3, **caractérisé en ce que** le bourrelet intérieur (9) au capuchon de fermeture (2, 28) présente dans sa transition dans l'intérieur de capuchon un chanfrein (10) qui s'applique aux cames de retenue (5) ou au bourrelet de retenue (21) à la seringue double ou cartouche double tandis que les fentes (16) ou le bourrelet intérieur (25) au mélangeur sont réalisés pour passer derrière les cames de retenue (5) où le bourrelet de retenue (21) à la seringue double ou la cartouche double.

5. Agencement selon l'une des revendications 1 à 4, **caractérisé en ce que** la face de base de la bride d'évacuation (19) de la seringue double ou de la cartouche double (20), du capuchon de fermeture (28) et de la partie d'admission (26) du mélangeur (24), pour un rapport de contenant-section transversale de 1:1, présente une forme symétrique, en particulier ovale, relativement aux deux axes (L, P).

6. Agencement selon l'une des revendications 1 à 4, **caractérisé en ce que** la face de base de la bride d'évacuation (4) de la seringue double ou de la cartouche double (1), du capuchon de fermeture (2) et de la partie d'admission (15) du mélangeur (3), pour un rapport de contenant-section transversale, qui est différent de 1:1, présente une forme non symétrique, en particulier une forme d'oeuf, relativement à un (P) des deux axes (L, P).

7. Agencement selon l'une des revendications 1 à 6, **caractérisé en ce qu'**il est disposé entre la seringue double ou la cartouche double et le mélangeur un adaptateur (34).

8. Agencement selon la revendication 7, **caractérisé en ce que** l'adaptateur (34), côté cartouche, présente les mêmes moyens de raccordement (35, 25) que le mélangeur, et côté évacuation, les mêmes moyens de raccordement (5, 36) que la seringue double ou la cartouche double.

9. Agencement selon la revendication 7 ou 8, **caractérisé en ce que** la face de base de l'adaptateur (34), relativement aux deux axes (L, P), présente une forme symétrique, en particulier ovale, ou relativement à l'un (P) des deux axes (L, P), une forme non symétrique, en particulier une forme d'oeuf.
